## Europäisches Patentamt

## European Patent Office

## Office européen des brevets

(19)

(11) Veröffentlichungsnummer: **0 221 195**
**B1**

(12) **EUROPÄISCHE PATENTSCHRIFT**

(45) Veröffentlichungstag der Patentschrift:
**13.06.90**

(51) Int. Cl.⁵: **B60C 15/04**, B60C 9/02

(21) Anmeldenummer: **85114045.9**

(22) Anmeldetag: **05.11.85**

(54) **Luftreifen für Fahrzeuge.**

(43) Veröffentlichungstag der Anmeldung:
**13.05.87 Patentblatt 87/20**

(45) Bekanntmachung des Hinweises auf die Patenterteilung:
**13.06.90 Patentblatt 90/24**

(84) Benannte Vertragsstaaten:
**AT BE CH DE FR GB IT LI LU NL SE**

(56) Entgegenhaltungen:
**DE-A- 2 408 474**
**FR-A- 468 733**
**FR-A- 698 304**
**FR-A- 1 327 810**
**FR-A- 2 299 169**
**GB-A- 2 123 360**
**GB-A- 2 135 253**
**US-A- 1 492 256**
**US-A- 1 527 700**

(73) Patentinhaber: **Janus, Jonny, Kreuzstrasse 53,
D-4000 Düsseldorf 1(DE)**

(72) Erfinder: **Janus, Jonny, Kreuzstrasse 53,
D-4000 Düsseldorf 1(DE)**

(74) Vertreter: **Türk, Gille, Hrabal, Brucknerstrasse 20,
D-4000 Düsseldorf 13(DE)**

ACTORUM AG

## Beschreibung

Die Erfindung betrifft einen Luftreifen für Fahrzeuge mit den Merkmalen des Oberbegriffes des Patentanspruches 1.

Bei Luftreifen für Fahrzeuge besteht ein Problem darin, wie die notwendige Cordeinlage oder Gewebeeinlage mit den in das Reifenmaterial eingebetteten Wulstringen verbunden wird. Üblich ist es, die Cordeinlage um die Wulstringe umzuklappen und die freien Enden in den Flankenbereich der Luftreifen zurückzuführen. Dadurch ergibt sich der Nachteil, daß die Flanken des Reifens im Wulstbereich verhältnismäßig steif sind, weil sie durch die zurückgeklappte Gewebeeinlage dicker als für die Stabilität des Reifens erforderlich sind. Das führt wiederum zu einer verringerten Elastizität des Luftreifens im Flankenbereich. Außerdem stellen die offenen Stoßkanten des Wulstumschlags eine Gefahr für die Standfestigkeit der Karkasse in den Reifenflanken dar.

Dieses Problem hat man dadurch zu lösen versucht, daß man die in die Wulste eingebetteten, aus mehreren miteinander verbundenen Drähten gebildeten Wulstringe oder Wulstkerne geteilt ausbildet und die Cordeinlage oder Gewebeeinlage zwischen den beiden Teilen der Wulstringe oder Wulstkerne hindurch führt und mit den Wulstringen oder Wulstkernen stoffschlüssig verbindet (DE-A 2 408 474). Auf diese Weise kann zwar das Zurücklegen der Gewebeeinlage im Wulstbereich und damit eine unnötige Verstärkung der Seitenflanken der Luftreifen vermieden werden, jedoch ist nicht sichergestellt, daß die Gewebeeinlage oder Cordeinlage ausreichend fest und dauerhaft mit den Wulstringen oder Wulstkernen verbunden ist. Es fehlt ferner die für einen einwandfreien Rundlauf notwendige gleichmäßige Materialverteilung innerhalb des das Fundament der Karkasse bildenden Wulstringprofils.

Aus der GB-A 2 135 253 ist ein Luftreifen nach dem Oberbegriff des Anspruchs 1 bekannt, bei dem ebenfalls der Versuch unternommen wird, die eingangs geschilderten Probleme zu beseitigen. Es stellt sich jedoch heraus, daß die Positionierung der Wulstringe oder Wulstkerne im Wulstbereich nicht genau genug beherrschbar ist und sich dementsprechend Ungleichförmigkeiten und sogar Unwuchten ergeben, die insbesondere für Hochgeschwindigkeitsstreifen unerwünscht sind.

Der Erfindung liegt die Aufgabe zugrunde, die bekannten Luftreifen für Fahrzeuge derart zu verbessern, daß sie eine große Elastizität im Flankenbereich aufweisen können, ohne daß die Verankerung zwischen der Cordeinlage und den Wulstringen bzw. Wulstkernen beeinträchtigt wird, wobei zugleich die Wulstringe oder Wulstkerne formgetreuer und deren Lage in den Wulsten genauer als bisher möglich sein soll und Gewicht und Kosten reduziert werden können, ohne auf die für die Montage erforderliche Flexibilität verzichten zu müssen.

Diese Aufgabe wird bei einem Luftreifen für Fahrzeuge der eingangs genannten Gattung mit den Merkmalen des kennzeichnenden Teiles des Patentanspruches 1 gelöst. Weitere vorteilhafte Ausgestaltungen der Erfindung sind Gegenstand der Unteransprüche.

Dadurch, daß beide Profilringe aus profiliertem Bandmaterial bestehen und seitlich axial ineinander schiebbar ausgebildet sind, lassen sie sich besonders genau im Wulstbereich der Luftreifen positionieren und auf einfache und preiswerte Weise in die entsprechend gewünschte Form bringen, so daß die Cordeinlage nicht nur stoffschlüssig bzw. kraftschlüssig, sondern auch formschlüssig mit den Wulstringen oder Wulstkernen zu verbinden ist, ohne daß es hierzu eines hohen technischen Aufwandes und damit teuren Fertigungsprozesses bedarf.

Sind die beiden Profilringe etwa L- oder U-förmig ausgebildet, so ist zum einen eine besonders preiswerte Herstellung der Profilringe aus Bandmaterial möglich, so daß dies zu einer erheblichen Kostenreduzierung bei der Herstellung der Profilringe führt, und zum anderen auf einfache aber umso wirkungsvollere Weise gewährleistet, daß die derart ausgestalteten Profilringe sich gegenseitig zentrierend ineinander greifen können, um zwischen sich jeweils ein Ende der Cordeinlage oder Gewebeeinlage aufzunehmen. Auf diese Weise erreicht man eine feste und dauerhafte Verankerung zwischen Cordeinlage und Wulstringen bzw. Wulstkernen, bei der der Verlauf bzw. die Strecke der zwischen den beiden Wulstringen oder -kernen angebrachten Cordeinlage an jeder Umfangstelle der Karkasse bzw. des Reifens gleich ist, ohne die Cordeinlage um die Wulstringe zu schlagen und mit ihren Enden in die Reifenflanken zurückführen zu müssen. Vielmehr kann die Cordeinlage im Bereich der Wulstringe oder Wulstkerne enden, ohne daß eine mangelhafte Verankerung zwischen Wulstringen und Cordeinlage zu befürchten wäre. Da die Wulstringe oder Wulstkerne aus miteinander zusammenwirkenden Profilringen, hergestellt aus Bandmaterial, bestehen, haben sie eine verbesserte Formtreue und lassen sich genauer als bisher möglich im Wulstbereich des Reifens positionieren und behalten ihre Form und Lage auch während des Heizens und Pressens ganz genau. Sie können sogar leichter als die bisher üblichen Wulstringe oder Wulstkerne ausgebildet sein, ohne daß damit Festigkeitsprobleme aufgeworfen würden.

Ist der nach oben weisende Schenkel wenigstens eines der beiden Profilringe federnd ausgebildet und nach außen abgebogen, so hat dies den Vorteil, daß scharfe Kanten dort vermieden werden, wo die Cordeinlage oder Gewebeeinlage in den zweiteiligen Wulstring oder Wulstkern einläuft, so daß keine Druck- bzw. Quetschbelastungen auftreten und die Cordeinlage oder Gewebeeinlage auch dann nicht scharfkantig abgeknickt werden kann, wenn die Luftfüllung des Luftreifens entwichen ist und das Fahrzeug noch bis zur nächsten Reparaturstelle weitergefahren wird. Die Abbiegungen der Schenkel vermeiden punktartige Drücke auf die Karkassenfäden. Der erfindungsgemäß ausgestaltete Luftreifen hat dementsprechend auch gute Notlaufeigenschaften.

Nach einem weiteren Merkmal der Erfindung hat jeder Profilring der mehrteiligen Wulstringe oder Wulstkerne sich in Umfangsrichtung desselben er-

EP 0 221 195 B1

2

streckende Schlitze oder Langlöcher, die einerseits eine gute formschlüssige Verbindung zwischen Wulstring und dem elastischen Reifenmaterial gewährleisten und andererseits eine gewisse Elastizität der an sich steifen Profilringe sicherstellen, insbesondere in Drillring oder Profilringe.

Diese Schlitze oder Langlöcher können dabei in mehreren parallelen Reihen angeordnet sein, wobei die in den einzelnen Reihen befindlichen Schlitze oder Langlöcher gegeneinander versetzt sind, während die Schlitze oder Langlöcher der beiden zusammengesetzten Profilringe einander praktisch überdecken, um nicht nur eine formschlüssige Verbindung zwischen dem elastischen Reifenmaterial und den Profilringen bzw. Wulstkernen zu erzielen, sondern auch sichergestellt ist, daß nicht ein ungeschlitzter Abschnitt eines Profilrings die elastische Eigenschaft des an dieser Stelle geschlitzten anderen Profilrings aufhebt.

Nach einem weiteren Merkmal der Erfindung ist jeder Wulstring oder Wulstkern mit einem Klemmring versehen, der einen der Schenkel der beiden Teile des Wulstringes klammerartig übergreift. Dadurch wird die Verbindung zwischen den beiden Teilen jedes Wulstringes oder Wulstkernes und der dazwischen liegenden Cordeinlage bzw. Gewebeeinlage besonders während der Herstellung des Luftreifens verbessert, so daß die beiden Teile des Wulstringes oder Wulstkernes miteinander und mit der dazwischenliegenden Gewebeeinlage fest und dauerhaft verbunden werden. Nach Fertigstellung des Luftreifens hält das elastische Reifenmaterial die Profilringe und die Cordeinlage in der vom Klemmring bestimmten Position zusammen.

Beispielsweise hat jeder Klemmring zwei federnd ausgebildete Schenkel, die sich auf die von dem Klemmring zusammengedrückten Schenkel der Profilringe legen und beispielsweise dadurch gebildet werden, daß der aus Bandmaterial bestehende Klemmring an seinen Längskanten quer verlaufende Einschnitte enthält. Besonders zweckmäßig ist es, den Klemmring im Bereich dieser Einschnitte nach innen umzubördeln, wodurch federnde Zungen oder Klemmbügel entstehen.

Andererseits ist es auch möglich, einen federnden Klemmring an einen Schenkel des einen Profilrings anzuformen und ihn somit einstückig mit diesem Profilring auszuführen.

Infolge seiner permanent wirkenden elastischen Auflage auf den zusammenklemmenden Teilen wird eine Zentrierung des gesamten Profilring- oder Kernringsystems schon während des Aufbaus der Karkasse erreicht. Auch wird ein guter Verbund zwischen den verwendeten Profil- und Klemmringen, der Gewebeeinlage und dem zwischen den Profilringen befindlichen Gummimaterial erzielt. Das hat eine Verbesserung der für die Montage des Luftreifens gewünschten Flexibilität zur Folge, weil sich die Profilringe jedes Wulstringes relativ zueinander bewegen können.

In der Zeichnung sind zwei Ausführungsbeispiele des erfindungsgemäßen Fahrzeugluftreifens schematisch dargestellt, und zwar zeigt

Fig. 1 einen Teilschnitt durch einen Wulstbereich des Luftreifens,

Fig. 2 eine schaubildliche Teilansicht des einen Profilringes des Wulstkernes oder Wulstringes des Reifens,

Fig. 3 eine Teilansicht des zweiten Profilringes des Wulstkernes,

Fig. 4 eine Teilansicht des Klemmringes und

Fig. 5 einen Teilschnitt durch den Wulstbereich des Luftreifens nach einer zweiten Ausführungsform der Erfindung.

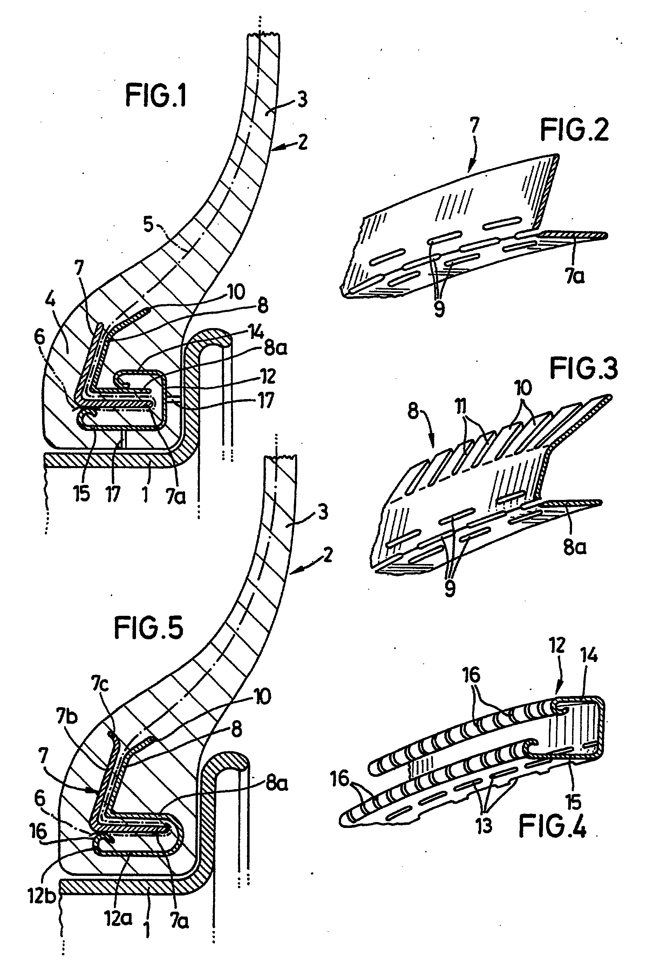

Gemäß Fig. 1 ist auf einer nur teilweise angedeuteten Felge 1 ein Luftreifen 2 angebracht, der an verhältnismäßig dünnen Flanken 3 jeweils einen dickeren Wulst 4 aufweist, der auf der Felge 1 aufliegt.

In den Luftreifen ist eine nur schematisch angedeutete Gewebeeinlage oder Cordeinlage 5 eingebettet, deren Enden 6 in den Wulsten 4 liegen und nicht in den Flankenbereich des Luftreifens zurückgeschlagen sind.

In jedem Wulst 4 ist jeweils ein Wulstkern oder Wulstring eingebettet, der aus zwei im wesentlichen L-förmigen bis U-förmigen Profilringen 7 und 8 besteht, die ineinander passen und ggfs. sogar formschlüssig ineinandergreifen können. Zwischen diesen Profilringen 7 und 8 ist das Ende 6 der Cordeinlage 5 sozusagen eingeklemmt, so daß es auch unter den stärksten im Fahrbetrieb auftretenden Zugbeanspruchungen nicht vom Wulstkern sich lösen kann.

Wie Fig. 2 und 3 zeigen, enthalten die aus Bandmaterial bestehenden Profilringe 7 und 8 in Längsrichtung verlaufende Langlöcher 9, welche ihnen eine gewisse Drill-Elastizität verleihen und gewährleisten, daß das Gummimaterial des Reifens 2 die Profilringe 7 und 8 durchdringen kann, um Lufteinschlüsse zu vermeiden und eine formschlüssige Verbindung zwischen den an sich eine glatte Oberfläche aufweisenden Profilringen und dem Reifenmaterial herzustellen.

Beim dargestellten Ausführungsbeispiel ist der innere Profilring 8 am oberen oder äußeren Ende mit federnden Zungen 10 versehen, die durch querverlaufende Einschnitte 11 gebildet sind, damit dieser Profilring 8 in Richtung der Reifenflanke eine gewisse Federigkeit aufweist und die Cordeinlage 5 nicht abknicken und dadurch abgequetscht werden kann, wenn der Reifen flach ist und im Notlauf benutzt wird. Der Profilring 7 könnte, obwohl in der Zeichnung nicht dargestellt ähnlich ausgebildet sein.

Die etwa horizontal verlaufenden Schenkel 7a und 8a der Profilringe 7 und 8 sind mittels eines Klemmringes 12 zusammengehalten, der ebenfalls aus Bandmaterial besteht und in Längsrichtung verlaufende Schlitze oder Langlöcher 13 enthält. Die etwa parallel zueinander verlaufenden Schenkel 14 und 15 sind nach innen umgebördelt und durch querverlaufende Einschnitte 16 federnd ausgebildet, so daß sie wie eine elastische Klammer die Schenkel 7a und 8a der Profilringe 7 und 8 und das betreffende Ende 6 der Cordeinlage 5 zusammenklammern. Je nach Druckbelastung des fertigvulkanisierten Reifens 2, insbesondere während der Montage, kann sich der Klemmring 12 aufgrund seiner elastisch federnden Ränder und umgebenden Gummimaterials gegenüber den im Verbund stehenden Profilringen 7 und 8 relativ bewegen und auch örtlich kleine Radien bilden.

Die Ringprofile 7, 8 und 12 zentrieren sich zwangsläufig aufgrund ihrer Profilierung gegeneinander. Während des Aufbaues des Reifens können sie zusätzlich durch in der Reifenform bzw. Vulkanisierform vorgesehene Stifte in der gewünschten Lage gehalten werden, welche im fertigen Reifenmaterial kleine Öffnungen 17 zurücklassen, welche beim fertigen Reifen nicht stören.

Bei der Ausführungsform gemäß Fig. 5 ist der nach oben weisende Schenkel 7b des inneren Profilringes 7 mit einer Abbiegung 7c versehen, die bezüglich dieses Profilringes nach außen, bezüglich des Luftreifens 2 jedoch nach innen weist, um auch Abknickungen oder Abquetschungen der Cordeinlage 5 über den Profilring 7 zu verhindern.

Außerdem ist bei dieser Ausführungsform am etwa horizontal verlaufenden Schenkel 8a des anderen Profilringes 8 ein bügelförmiger Klemmring 12a angeformt, der sich mit seinem einwärts gebördelten freien Rand 12h federnd gegen den eingesteckten Schenkel 7a des Profilringes 7 legt und auf diese Weise das Ende 6 der Cordeinlage 5 zwischen den Profilringen 7 und 8 festhält.

## Patentansprüche

1. Luftreifen für Fahrzeuge, mit einem torusförmig gewölbten Körper, an diesem angeformten Wulsten (4), einem aus zwei Teilringen (7 und 8) bestehenden Wulstring (7, 8) in jedem Wulst (4) und einer Cordeinlage (5), deren Enden (6) jeweils zwischen den beiden Teilringen (7 und 8) jedes Wulstringes hindurchgeführt sind, wobei die Teilringe (7 und 8) jedes Wulstrings formschlüssig ineinander greifende Profilringe (7, 8) sind, dadurch gekennzeichnet, daß beide Profilringe (7, 8) aus profiliertem Bandmaterial bestehen und axial ineinanderschiebbar ausgebildet sind.

2. Luftreifen nach Anspruch 1, dadurch gekennzeichnet, daß die beiden Profilringe (7, 8) etwa L- oder U-förmig ausgebildet sind.

3. Luftreifen nach Anspruch 2, dadurch gekennzeichnet, daß der nach oben weisende Schenkel (10) wenigstens eines der beiden Profilringe (7, 8) federnd ausgebildet und nach außen abgebogen ist.

4. Luftreifen nach Anspruch 3, dadurch gekennzeichnet, daß das abgebogene Ende (10) federnd ausgebildet ist.

5. Luftreifen nach einem der Ansprüche 1 bis 4, dadurch gekennzeichnet, daß jeder Profilring (7, 8) in Umfangsrichtung desselben sich erstreckende Schlitze oder Langlöcher (9) enthält.

6. Luftreifen nach Anspruch 5, dadurch gekennzeichnet, daß die Schlitze oder Langlöcher (9) in mehreren parallelen Reihen angeordnet und in diesen Reihen gegeneinander versetzt sind.

7. Luftreifen nach einem der Ansprüche 1 bis 6, dadurch gekennzeichnet, daß der Wulstring (7, 8) einen Klemmring (12, 12a) aufweist, der einen der Schenkel (7a, 8a) wenigstens eines der beiden Teile des Wulstringes klammerartig übergreift.

8. Luftreifen nach Anspruch 7, dadurch gekennzeichnet, daß der Klemmring (12) zwei federnd ausgebildete Schenkel (14, 15) aufweist.

9. Luftreifen nach Anspruch 7, dadurch gekennzeichnet, daß der Klemmring (12a) an den einen Schenkel (8a) des einen Profilringes (8) einstückig angebaut ist (Fig. 5).

10. Luftreifen nach Anspruch 8 oder 9, dadurch gekennzeichnet, daß die federnd ausgebildeten Schenkel (14, 15) Einschnitte (16) enthalten und nach innen gebördelt sind.

## Claims

1. Pneumatic tire for vehicles with a toroidally bowed body, with beads (4) formed on it, in each bead (4) a bead ring (7, 8) consisting of two part rings (7 and 8) and a cord ply (5) which respective ends (6) are passed through the two part rings (7 and 8) of each bead ring, the part rings (7 and 8) of each bead ring (4) being positively interengaging profiled rings (7, 8), characterized in that profiled rings (7, 8) consists of profiled strip material and are formed axially interconnecting.

2. Pneumatic tire as claimed in claim 1, characterized in that the two profiled rings (7, 8) are substantially L- or U-shaped.

3. Pneumatic tire as claimed in claim 2, characterized in that the upwardly extending limb (10) of at least one of the two profiled rings (7, 8) is formed resiliently and bent outwardly.

4. Pneumatic tire as claimed in claim 3, characterized in that the bent end (10) is formed resiliently.

5. Pneumatic tire as claimed in one of the claims 1 to 4, characterized in that each profiled ring (7, 8) comprises slots or elongated holes (9) in its peripheral direction.

6. Pneumatic tire as claimed in claim 5, characterized in that said slots or elongated holes (9) are arranged in a number of parallel rows and are mutually staggered in these rows.

7. Pneumatic tire as claimed in one of claims 1 to 6, characterized in that said bead ring (7, 8) comprises a clamping ring (12, 12a) engaging one of the limbs (7a, 8a) of at least one of the two parts of the bead ring in a jamming manner.

8. Pneumatic tire as claimed in claim 7, characterized in that the clamping ring (12) comprises two resiliently formed limbs (14, 15).

9. Pneumatic tire as claimed in claim 7, characterized in that the clamping ring (12a) is integrally formed to one of the limbs (8a) of one of the profiled rings (8) (Figure 5).

10. Pneumatic tire as claimed in claim 8 or claim 9, characterized in that the resiliently formed limbs (14, 15) comprise notches (16) and are folded inwardly.

## Revendications

1. Pneumatique pour véhicules, comportant un corps cintré de forme torique, des talons (4) formés par moulage sur ce corps, une tringle (7, 8) constituée de deux tringles partielles (7 et 8) et située dans chaque talon (4), et un insert (5) formé de câblés, dont les extrémités (6) s'étendent respectivement entre les deux tringles partielles (7 et 8) constituant chaque tringle, ces tringles partielles (7 et 8) étant des anneaux profilés (7, 8) imbriqués l'un dans l'autre selon une liaison par complémentarité de formes, caractérisé en ce que les deux anneaux profilés (7, 8) sont réalisés en un matériau en forme de bande profilée et agencés de manière à pouvoir être imbriqués axialement l'un dans l'autre.

2. Pneumatique selon la revendication 1, caractérisé en ce que les deux anneaux profilés (7, 8) sont réalisés approximativement avec une forme en L ou en U.

3. Pneumatique selon la revendication 2, caractérisé en ce que la branche (10), dirigée vers le haut, d'au moins l'un des anneaux profilés (7, 8) est agencée de manière à être élastique et est repliée vers l'extérieur.

4. Pneumatique selon la revendication 3, caractérisé en ce que l'extrémité repliée (10) est agencée de manière à être élastique.

5. Pneumatique selon l'une des revendications 1 à 4, caractérisé en ce que chaque anneau profilé (7, 8) contient des fentes ou des trous allongés (9), qui s'étendent dans sa direction circonférentielle.

6. Pneumatique selon la revendication 5, caractérisé en ce que les fentes ou les trous allongés (9) sont disposés selon plusieurs rangées parallèles et sont décalés les uns par rapport aux autres dans ces rangées.

7. Pneumatique selon l'une des revendications 1 à 6, caractérisé en ce que la tringle (7, 8) possède un anneau de serrage (12, 12a), qui s'engage à la manière d'une pince par-dessus l'une des branches (7a, 8a) d'au moins l'une des deux parties de la tringle.

8. Pneumatique selon la revendication 7, caractérisé en ce que l'anneau de serrage (12) comporte deux branches (14, 15) agencées de manière à être élastiques.

9. Pneumatique selon la revendication 7, caractérisé en ce que l'anneau de serrage (12a) est monté d'un seul tenant sur une branche (8a) d'un anneau profilé (8) (figure 5).

10. Pneumatique selon la revendication 8 ou 9, caractérisé en ce que les branches (14, 15) agencées de manière à être élastiques comportent des entailles (16) et sont rabattues vers l'intérieur.

FIG.1

FIG.2

FIG.3

FIG.5

FIG.4